(19) Europäisches Patentamt
European Patent Office
Office européen des brevets

(11) Veröffentlichungsnummer: **0 084 674**
**A1**

(12) # EUROPÄISCHE PATENTANMELDUNG

(21) Anmeldenummer: **82111962.5**

(22) Anmeldetag: **23.12.82**

(51) Int. Cl.³: **C 01 B 17/90**

(30) Priorität: **29.12.81 DE 3151691**

(43) Veröffentlichungstag der Anmeldung: **03.08.83 Patentblatt 83/31**

(84) Benannte Vertragsstaaten: **DE GB NL**

(71) Anmelder: **HOECHST AKTIENGESELLSCHAFT, Postfach 80 03 20, D-6230 Frankfurt/Main 80 (DE)**

(72) Erfinder: **Medic, Nikolaj, Johann-Strauss-Strasse 18, D-6233 Kelkheim (Taunus) (DE)**
Erfinder: **Gräser, Reinhold, Dr., Loreleistrasse 81, D-6230 Frankfurt am Main 80 (DE)**
Erfinder: **Russow, Jürgen, Dr., Am Schieferberg 45, D-6233 Kelkheim (Taunus) (DE)**

(54) **Verfahren zur Reinigung von Abfallschwefelsäure.**

(57) Schwefelsäure mit einem Gehalt von 50–90 Gew.-% $H_2SO_4$, die bei der Trocknung eines Gasgemisches angefallen ist, das neben Methylchlorid und Wasser noch Methanol und Dimethyläther enthält, wird durch Behandeln mit Wasserdampf gereinigt. Man heizt die zu reinigende Schwefelsäure zum Sieden auf, leitet Wasserdampf mindestens der gleichen Temperatur ein und führt diese Behandlung mindestens 2 Stunden lang durch.

EP 0 084 674 A1

0084674

HOECHST AKTIENGESELLSCHAFT HOE 81/F 337 Dr.SP/sch

# Verfahren zur Reinigung von Abfallschwefelsäure

Die vorliegende Erfindung betrifft ein Verfahren zur Reinigung von Methylschwefelsäure enthaltender Abfallschwefelsäure mit einem Gehalt von mindestens 50 Gew.-% $H_2SO_4$ durch Einblasen von Wasserdampf.

Methylchlorid wird heute vorzugsweise durch Veresterung von Methanol mit Chlorwasserstoff hergestellt. Bei diesem Verfahren werden die Reaktionspartner unter erhöhtem Druck und bei Temperaturen von 250 bis 350°C, z.B. an Aluminiumoxid-Katalysatoren umgesetzt. Das entstehende Methylchlorid hat nach dem Abkühlen auf Raumtemperatur und Kondensation von Reaktionswasser etwa folgende Zusammensetzung:

| | |
|---|---|
| $CH_3Cl$ | 98 % |
| $CH_3OH$ | < 0,03 % |
| $CH_3$-$OCH_3$ | 0,3-2 % |
| HCl | < 2 % |
| $H_2O$ | 0,1 % |

Gemäß folgender Gleichung

$$CH_3OH + HCl \longrightarrow CH_3Cl + H_2O$$

entstehen Methylchlorid und Wasser. Daneben enthält das Reaktionsgas nicht umgesetzte Ausgangsstoffe sowie als Nebenprodukt Dimethyläther. Üblicherweise wird das rohe Monochlormethan mit Schwefelsäure von mindestens 80 Gew.-% $H_2SO_4$ gewaschen und so getrocknet. Dabei wird nicht nur das restliche Wasser von der Schwefelsäure gebunden, sondern auch Spuren von Methanol und Dimethyl-

äther (in Form von Schwefelsäure-Monomethylester bzw. als Oxoniumsalz). Meist wird zur Trocknung 95 %ige Schwefelsäure eingesetzt. Diese geht bei der Trocknung in eine Abfallschwefelsäure über, die noch etwa 80 Gew.-% $H_2SO_4$, 5 bis 10 Gew.-% Dimethyläther und andere Verunreinigungen wie Schwefelsäure-Monomethylester und Wasser enthält.

Die Aufarbeitung dieser Abfallschwefelsäure ist ein schwierig zu lösendes Umweltproblem. Aus diesem Grund wird gemäß DE-PS 2 658 132 das rohe Methylchlorid zunächst in einer ersten Stufe mit hochkonzentrierter Salzsäure zur Entfernung der organischen Verunreinigungen gewaschen und erst danach in einer zweiten Stufe mit konzentrierter Schwefelsäure getrocknet. Eine vollständige Abtrennung des Dimethyläthers gelingt in der ersten Stufe offensichtlich nur, wenn die Salzsäure-Konzentration mindestens 37 % beträgt und die Temperatur der Salzsäure unter 20°C liegt. Es ist dabei nachteilig, daß sich bei der üblicherweise unter Druck betriebenen Salzsäurewäsche erhebliche Mengen Monochlormethan in der Salzsäure lösen.

Es hat nicht an Versuchen gefehlt, die beschriebenen Schwierigkeiten zu lösen, in dem man, z.B. durch eine selektive Wäsche schon vor der Schwefelsäurewäsche die organischen Verunreinigungen abfängt. Versuche, den Dimethyläther durch Adduktbildung mit anorganischen Chloriden, insbesondere Zinkchlorid, zu entfernen, werden in der DE-PS 2 658 132 erwähnt.

Die Nachteile eines derartigen Reinigungsverfahrens bestehen darin, daß ein Fremdstoff in das System eingeführt werden muß, der die Reinheit des Methylchlorids beeinflußt. Bei Waschlösungen, die im Kreislauf mit Absorption und Desorption geführt werden müssen, würden sich Verunreinigungen in der Waschlösung anreichern.

Daher muß dauernd ein gewisser Teil der Waschlösung ausgeschleust und durch frische Lösung ersetzt werden.

In der DE-AS 2 503 610 wird ein Verfahren zur Reinigung von Schwefelsäure beschrieben, die bei der Reinigung von Methylchlorid anfällt und durch Methylschwefelsäure verunreinigt ist. Nach diesem Verfahren wird die Schwefelsäure mit 10 bis 25 Gew.-% flüssigem Wasser verdünnt und anschließend soviel Wasserdampf mit einer Temperatur von 95 bis 150°C durch die Schwefelsäure geleitet, daß die Temperatur der Schwefelsäure auf 170 bis 180°C ansteigt. Dabei muß notwendigerweise ein Teil des Wasserdampfes kondensieren. Schließlich wird das durch Verseifung der Methylschwefelsäure gebildete Methanol abdestilliert. Nachteilig bei diesem Verfahren ist, daß die Säure bei der Aufarbeitung stark, z.B. von 85 Gew.-% $H_2SO_4$ auf 50 Gew.-% $H_2SO_4$, verdünnt wird und daher in einer nachträglichen Aufkonzentrierungsstufe die eingebrachte Wassermenge unter erheblichem Energieaufwand wieder verdampft werden muß.

Es wurde nun ein Verfahren zur Reinigung von Schwefelsäure mit einem Gehalt von 50 bis 90 Gew.-% $H_2SO_4$ gefunden, die bei der Trocknung eines Gasgemisches angefallen ist, das neben Methylchlorid und Wasser noch Methanol und Dimethyläther enthält, durch Behandlung der Schwefelsäure mit Wasserdampf. Das Verfahren ist dadurch gekennzeichnet, daß man die zu reinigende Schwefelsäure zum Sieden aufheizt, man Wasserdampf von mindestens der gleichen Temperatur einleitet und man die Behandlung mindestens 2 Stunden lang durchführt.

Es ist überraschend, daß bei diesem Verfahren die gelösten Verunreinigungen quantitativ entfernt werden können. Dies gilt umso mehr, als laut DE-PS 2 658 132 selbst mit Wasserdampf bei 200°C der Dimethyläther und der

Schwefelsäuremethylester nur teilweise aus der Säure abgestreift werden können. Wenn der Dampf eine höhere Temperatur aufweist als dem Siedepunkt der Säure entspricht, so findet eine Konzentration der Säure statt, die umso ausgeprägter ist, je höher die Dampftemperatur ist. Diese Variante des Verfahrens ist daher zur gleichzeitigen Konzentrierung verdünnter Säuren, z.B. von 50 bis 75 Gew.-% $H_2SO_4$, bevorzugt. Das Arbeiten mit Dampf einer Temperatur die dem Siedepunkt der Säure entspricht, ist bevorzugt, wenn keine Konzentrierung der Abfallsäure gewünscht wird.

Der Siedepunkt der Säure hängt ab vom Gehalt an $H_2SO_4$ und vom Arbeitsdruck. Im allgemeinen reichen Arbeitsdrucke von 0,1 bis 1,5 bar, insbesondere 0,9 bis 1,2 bar aus. Die eingesetzte Schwefelsäure mit maximal 90 Gew.-% $H_2SO_4$ verliert beim Sieden praktisch nur Wasser. Die Partialdrucke an Wasserdampf von verdünnter Schwefelsäure in Abhängigkeit von der Temperatur sind bekannt, z.B. aus Ullmann, Encyclopädie der technischen Chemie, 3. Auflage, Seite 427 bis 428.

Die Menge an Wasserdampf ist nicht kritisch. Die insgesamt eingesetzte Menge kann das 0.1- bis 10-fache, insbesondere das 0.25- bis 2-fache des Gewichts der zu behandelnden Säure ausmachen.

Bevorzugt eingesetzt werden Schwefelsäuren mit einem Gehalt von 60 bis 85 Gew.-% $H_2SO_4$. Wenn die Behandlungsdauer mit Wasserdampf wesentlich verkürzt wird, so werden schlechtere Ergebnisse erhalten. Es gelingt nicht, durch Einblasen von Inertgasen, wie z.B. Stickstoff, die gelösten Stoffe aus der heißen Säure auszutreiben, d.h. auf die Behandlung mit Wasserdampf zu verzichten.

Es hat sich gezeigt, daß die heiße Säure beim Einleiten von Wasserdampf zum Schäumen neigt. Nach einer besonderen

Ausgestaltung des erfindungsgemäßen Verfahrens gelingt es, dieses Schäumen der Säure vollständig zu vermeiden. Hierzu wird die zu reinigende Säure in siedende reine oder vorgereinigte Säure eingetragen und in diese gleichzeitig Wasserdampf mit mindestens der Temperatur des Siedepunktes der zu reinigenden Säure eingeleitet. Für diese Reaktion kann z.B. ein heizbares Rührgefäß verwendet werden. Dabei wird in in die gerührte siedende Säure gleichzeitig Wasserdampf mit mindestens der Temperatur der siedenden Säure eingeleitet und kontinuierlich kalte oder vorgewärmte zu reinigende Wasch-Schwefelsäure eingetragen. Zweckmäßigerweise wird durch kontinuierliches Ablassen der resultierenden vorgereinigten Säure der Flüssigkeitsspiegel konstant gehalten. Der Siedepunkt der vorgelegten Säure soll mindestens so hoch liegen wie der der zulaufenden Säure und bei dieser Variante jedenfalls über 180°C liegen.

Diese Ausgestaltung des erfindungsgemäßen Verfahrens eignet sich besonders für Wasch-Schwefelsäure mit einem Gehalt von mindestens 75 Gew.-% $H_2SO_4$, d.h. mit einem Siedepunkt (bei 1 bar) von mindestens 180°C. Es ist bevorzugt die Geschwindigkeit der Zugabe der rohen Säure so zu bemessen, daß die pro Stunde zugegebene Menge an roher Schwefelsäure 10 bis 50 % der vorliegenden Menge an bereits vorgereinigter siedender Säure entspricht.

Bereits bei dieser Vorreinigung im Rührgefäß wird die Hauptmenge der in der Säure gelösten Verunreinigungen ausgeblasen, um die Restmenge an organischen Verunreinigungen abzutreiben, kann man in einem zweiten, sich anschließenden Verfahrensschritt nunmehr die vorgereinigte, nicht mehr schäumende Säure in einer Bodenkolonne mit Wasserdampf strippen. Wenn die zugegebene Säure bereits siedend aufgegeben wird und der eingeleitete Wasserdampf mindestens die gleiche Temperatur aufweist, so fällt nach der Strippung eine Schwefelsäure an, deren Gehalt an

Dimethyläther unter 1 ppm liegt, deren Gehalt an Gesamtkohlenstoff unter 0,05 % ist und deren Gehalt an $H_2SO_4$, gegenüber der zugegebenen Schwefelsäure, unverändert ist. Man kann auf diese Weise mit kleinstem Dampfbedarf Gehalte von nur 0,0001 % Dimethyläther und weniger erreichen.

Bei dieser Kombination Rührgefäß/Kolonne soll die Temperatur der Säure im Rührgefäß mindestens 180°C betragen.

Anstelle der oben genannten Kombination von Rührgefäß und Bodenkolonne zum Austreiben der flüchtigen Verbindungen kann auch eine mehrstufige Rührkaskade verwendet werden. In letzterem Fall ist im allgemeinen der technische Aufwand (Anzahl der hintereinandergeschalteten Rührstufen) höher als bei der Kombination eines Rührgefäßes mit einer Kolonne.

Bei der Kombination Rührgefäß-Bodenkolonne wird zweckmäßigerweise so verfahren, daß man den Dampf, der bei der Strippung der Bodenkolonne am Kopf entweicht, in das Rührgefäß leitet, bevor er kondensiert wird. Jedoch können Kolonne und Rührgefäß auch mit voneinander unabhängigen Frischdampfzuleitungen betrieben werden. Nach dieser Variante wird zwar mehr Dampf benötigt, aber kein reineres Produkt erhalten.

Bei der Strippung vertieft sich die dunkle Farbe der Schwefelsäure. Der Kohlenstoff liegt in der Hauptsache in elementarer, filtrierbarer Form vor. Gegen die Anwendung einer Filtration spricht, daß der abfiltrierte Kohlenstoff vor einer etwaigen Verbrennung oder Deponierung frei von Schwefelsäure gewaschen werden muß und dabei erneut verdünnte Schwefelsäure entsteht. Im Prinzip ist jedoch eine Filtration, beispielsweise über Glaswolle, durchaus möglich.

Es ist bekannt, daß zur Beschleunigung des Abbaus von organischen Verbindungen in heißer konzentrierter Schwefelsäure Salpetersäure und/oder Nitroschwefelsäure verwendet werden können (vgl. DE-PS 679 850, 751 909, 1 079 606, 2 616 768 und US-PS 2 390 916). Die Reaktion zwischen dem Oxidationsmittel und der organischen Substanz erfolgt dabei im Temperaturbereich zwischen 290 und 320°C.

Es wurde nun gefunden, daß es gelingt, den beim erfindungsgemäßen Verfahren anfallenden elementaren Kohlenstoff mit Salpetersäure zu oxidieren, wenn man die mit Wasserdampf behandelte Säure noch heiß mit Salpetersäure versetzt. Wird jedoch die Schwefelsäure abgekühlt, auf die gleiche Temperatur wieder aufgeheizt und erst dann mit Salpetersäure versetzt, so gelingt es auch nach mehrstündige Reaktionszeit nicht, eine zufriedenstellende Reinigung der Schwefelsäure herbeizuführen. Es ist bevorzugt, die Schwefelsäure unmittelbar nach dem Ablauf aus der Kolonne oder einem Rührgefäß mit Salpetersäure zu versetzen. Bei der Behandlung mit Salpetersäure soll die Temperatur der Schwefelsäure mindestens 180°C, vorzugsweise mindestens 190°C, insbesondere mindestens 200°C betragen. Die zuzugebende Menge an Salpetersäure hängt ab von der Menge an ausgeschiedenem Kohlenstoff. In den meisten Fällen reichen 10 g $HNO_3$ (100 %ig) pro 1 g Kohlenstoff der Säure (Summe aus elementarem und gelöstem Kohlenstoff) aus. Die nötige Behandlungsdauer mit Salpetersäure zur Zerstörung des Kohlenstoffs sinkt mit steigender Temperatur. Der Effekt der Reinigung läßt sich gut an der Farbaufhellung der Säure beobachten. Im allgemeinen reichen 30 bis 60 Minuten Reaktionszeit mit Salpetersäure aus. Auch die Behandlung mit $HNO_3$ kann in einer (weiteren) Kolonne erfolgen.

Die Erfindung wird durch die folgenden Beispiele näher erläutert.

Beispiel 1

In die erste Stufe einer 3-stufigen Rührkaskade, bestehend aus 3 hintereinander geschalteten emaillierten Rührgefäßen von je 63 l Gesamtinhalt werden pro Stunde 70 kg $H_2SO_4$ mit einem Gehalt von 80 Gew.-% $H_2SO_4$ und 8 Gew.-% Dimethylether mit einer Temperatur von 130°C eingespritzt. Die Temperatur der Säure in den Rührgefäßen wird auf 205°C, d.h. am Siedepunkt gehalten. Die Säure gelangt durch einen Überlauf von der ersten in die zweite Stufe und schließlich in die dritte, aus der sie abgezogen wird. In jede Rührstufe werden 8 kg/h Dampf von 205°C eingeleitet. Die aus der letzten Rühr-Stufe ablaufende Schwefelsäure enthält 80,2 Gew.-% $H_2SO_4$ und weniger als 0,01 Gew.-% Dimethylether.

Beispiel 2

In ein heizbares, emailliertes Rührgefäß mit einem Gesamtinhalt von 63 l werden kontinuierlich pro Stunde 35 kg Schwefelsäure von Raumtemperatur gepumpt. Die Säure enthält 79,2 Gew.-% $H_2SO_4$ und 6,2 Gew.-% Dimethylether. Die Temperatur der Säure in dem Rührgefäß wird auf 204°C, d.h. am Siedepunkt gehalten, das Füllvolumen beträgt 42 l Schwefelsäure. Die aus dem Rührgefäß ablaufende Säure wird auf den Kopf einer Bodenkolonne aufgegeben, durch die von unten nach oben pro Stunde 22 kg Dampf von 204°C strömen. Der am Kopf der Kolonne abgehende Wasserdampf wird in das Rührgefäß eingeleitet und der aus dem Rührgefäß abgezogene Dampf mit den Verunreinigungen kondensiert. Die abgestrippten Substanzen, in der Hauptsache Methanol und Dimethylether, lösen sich sehr leicht in dem Dampfkondensat, das in einer biologischen Reinigungsanlage aufgearbeitet wird. Aus der Kolonne läuft unter den angegebenen Bedingungen eine Schwefelsäure mit einem Gehalt von 79,3 Gew.-% $H_2SO_4$ ab, deren Gehalt an Schwefelsäuremethylester kleiner als 0,0001 Gew.-% ist.

Beispiel 3

Die nach dem im Beispiel 2 beschriebenen Verfahen gereinigte Schwefelsäure ist durch elementaren Kohlenstoff tief schwarz gefärbt. Sie enthält 0,12 % Kohlenstoff in elementarer und noch 0,03 % in gelöster Form. Der ablaufenden Säure werden bei 204°C 20 ml Salpetersäure (65 Gew.-% $HNO_3$) pro Liter Schwefelsäure zugesetzt. Schwefelsäure und Salpetersäure durchströmen eine mit ringförmigen Füllkörpern gefüllte 1 m lange Kolonne NW 150 mm von unten nach oben. Die entstehenden Gase, in der Hauptsache $CO_2$ und $NO_x$, entweichen am oberen Ende der Kolonne. Die überlaufende Säure ist gelb gefärbt, die Ablauftemperatur beträgt 150°C, der Gesamtkohlenstoffgehalt 0,05 %, der Gehalt der Säure an $NO_x$ 0,15 % (als $NO_2$ berechnet). Die mittlere Reaktionszeit zwischen Kohlenstoff und Salpetersäure betrug ca. 40 Minuten.

Patentansprüche:

1. Verfahren zur Reinigung von Schwefelsäure mit einem Gehalt von 50 - 90 Gew.-% $H_2SO_4$, die bei der Trocknung eines Gasgemisches angefallen ist, das neben Methylchlorid und Wasser noch Methanol und Dimethyläther enthält, durch Behandeln mit Wasserdampf, dadurch gekennzeichnet, daß man die zu reinigende Schwefelsäure zum Sieden aufheizt, man Wasserdampf mindestens der gleichen Temperatur einleitet und man die Behandlung mindestens 2 Stunden lang durchführt.

2. Verfahren nach Anspruch 1, dadurch gekennzeichnet, daß die eingesetzte Säure eine Konzentration von 60 - 85 Gew.-% $H_2SO_4$ aufweist.

3. Verfahren nach Anspruch 1, dadurch gekennzeichnet, daß man die Reinigung bei einem Druck von 0,1 - 1,5, insbesondere 0,9 - 1,2 bar, durchführt.

4. Verfahren nach Anspruch 1, dadurch gekennzeichnet, daß man die zu reinigende Säure in siedende vorgereinigte Säure einträgt und in diese gleichzeitig Wasserdampf der gleichen Temperatur einleitet.

5. Verfahren nach Anspruch 4, dadurch gekennzeichnet, daß die Temperatur der vorgereinigten Säure mindestens 180°C beträgt.

6. Verfahren nach Anspruch 4, dadurch gekennzeichnet, daß die pro Stunde zugegebene Menge an roher Schwefelsäure 10 - 50 % der vorliegenden Menge an bereits vorgereinigter siedender Säure entspricht.

7. Verfahren nach Anspruch 1, dadurch gekennzeichnet, daß man die Schwefelsäure zur Zerstörung des abgeschiedenen Kohlenstoffs unmittelbar nach der Wasserdampfbehandlung mit Salpetersäure versetzt.

Europäisches Patentamt

# EUROPÄISCHER RECHERCHENBERICHT

0084674

Nummer der Anmeldung

EP 82 11 1962

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| D,A | DE-B-2 503 610 (WACKER-CHEMIE GMBH)<br>* Ansprüche 1, 2 * | | C 01 B 17/90 |
| A | FR-A-1 223 678 (W. BUSCHING)<br>* Anspruch 1 * | | |
| A | DE-A-1 667 692 (PULLMAN INC.)<br>* Anspruch 1 * | | |
| A | FR-A- 703 306 (H. FRISCHER) | | |
| A | FR-A- 922 519 (STANDARD OIL DEVELOPMENT ) | | RECHERCHIERTE SACHGEBIETE (Int. Cl. 3) |
| D,A | DE-C-2 658 132 (HOECHST AG) | | C 01 B 17/00 |

Der vorliegende Recherchenbericht wurde für alle Patentansprüche erstellt.

| Recherchenort | Abschlußdatum der Recherche | Prüfer |
|---|---|---|
| BERLIN | 10-03-1983 | ASSOGNA R. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82